# EUROPEAN PATENT APPLICATION

(11) **EP 4 752 998 A1**
(43) Date of publication of application: **03.06.2026**
(21) Application number: 25216747.3
(22) Date of filing: 18.11.2025
(51) Int. Cl.: H01M 10/04

(54) **ELECTRODE ASSEMBLY FOR SECONDARY BATTERY AND TAPE ATTACHMENT APPARATUS AND METHOD FOR MANUFACTURING THE SAME**

(30) Priority: 27.11.2024 KR 20240172731
(71) Applicant: SAMSUNG SDI CO., LTD., Yongin-si, Gyeonggi-do 17084 (KR)
(72) Inventor: KIM, Hyojin, Yongin-si 17084 (KR)
(74) Representative: Marks & Clerk LLP

(57) **Abstract**

An electrode assembly for a secondary battery includes a stack including a first electrode plate, a second electrode plate, and a separator between the first electrode plate and the second electrode plate, and an adhesive member attached to at least one side surface of the stack, the adhesive member extending to cover the at least one side surface of the stack and at least a part of each of a front surface and a rear surface of the stack, the adhesive member including a first adhesive member attached to the stack at a central portion of the stack in a longitudinal direction, and a second adhesive member attached to the stack and adjacent to the first adhesive member in the longitudinal direction, an adhesive surface of the first adhesive member having a greater area than an adhesive surface of the second adhesive member.

## Description

### BACKGROUND

### 1. Field

The present disclosure relates to an electrode assembly for a secondary battery, and a tape attachment apparatus and method for manufacturing the same.

### 2. Description of the Related Art

Secondary batteries are batteries that can be (re)charged and discharged, unlike primary batteries that cannot be (re)charged. A secondary battery generally includes an electrode assembly composed of a positive electrode plate, a separator, and a negative electrode plate, a case (a can, a pouch, or the like) which accommodates the electrode assembly, and external terminals for connecting the electrode assembly to an external power source and a load. Positive and negative electrode tabs are formed on the electrode assembly, and the electrode tabs or related members (e.g., a current collector, a connection member, and an auxiliary tab) are electrically connected to positive and negative electrode terminals or related members (e.g., a rivet terminal, a cap plate, a rivet terminal, and the like) which are located at the outside.

The above information disclosed in this Background section is for enhancement of understanding of the background of the present disclosure, and therefore, it may contain information that does not constitute a related (or prior) art.

### SUMMARY

According to an aspect of the present disclosure, there is provided an electrode assembly for a secondary battery, which includes a stack in which a first electrode plate, a second electrode plate, and a separator interposed between the first electrode plate and the second electrode plate are sequentially alternately stacked (e.g the stack includes a first electrode plate, a second electrode plate, and a separator between the first electrode plate and the second electrode plate), and an adhesive member attached to at least one side surface of the stack, extending to cover the one side surface of the stack, and covering at least a part of each of a front surface and a rear surface of the stack. The adhesive member includes a first adhesive member attached to the stack at a central portion of the stack in a longitudinal direction, and a second adhesive member attached to the stack to be adjacent to the first adhesive member in the longitudinal direction. An adhesive surface of the first adhesive member has a greater (e.g. wider) area than an adhesive surface of the second adhesive member.

According to another aspect of the present disclosure, there is provided a tape attachment apparatus including an adsorption unit configured to selectively adsorb and fix a central portion of the provided adhesive member, align and move the central portion with and to a correct position, and attach the central portion of the adhesive member to one side surface of the provided stack, and a roller unit including a first roller and a second roller aligned to correspond to one end portion and the other end portion of the adhesive member, respectively, and provided to linearly reciprocate. The first roller and the second roller may perform a first operation of moving the first roller and the second roller in one direction and attaching the one end portion of the adhesive member and the other end portion of the adhesive member to the front surface and the rear surface of the stack, respectively.

According to still another aspect of the present disclosure, there is provided a tape attachment method including (e.g. a first operation of) preparing the stack and the adhesive member, (e.g. a second operation of) aligning a central portion of the adhesive member to a side surface of the stack, moving the central portion in one direction, and attaching the central portion to the side surface of the stack, and (e.g. a third operation of) aligning a first roller and a second roller to one end portion and the other end portion of the adhesive member, respectively, moving the first roller and the second roller in the one direction, and attaching the one end portion and the other end portion of the adhesive member to the front surface and the rear surface of the stack, respectively.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

Features will become apparent to those of skill in the art by describing in detail embodiments with reference to the attached drawings, in which:
FIG. 1 illustrates a perspective view of an electrode assembly for a secondary battery according to some embodiments of the present disclosure;
FIG. 2 illustrates a perspective view of an exterior of a prismatic secondary battery according to some embodiments of the present disclosure;
FIGS. 3 to 5 illustrate schematic perspective views of an electrode assembly for a secondary battery according to an embodiment of the present disclosure;
FIG. 6 illustrates a schematic view of a tape attachment apparatus for an electrode assembly according to an embodiment of the present disclosure;
FIGS. 7 and 8 illustrate schematic views of stages in a tape attachment process using a tape attachment apparatus of the electrode assembly according to an embodiment of the present disclosure;
FIG. 9 illustrates a flow chart of a tape attachment method for an electrode assembly according to an embodiment of the present disclosure; and
FIG. 10 illustrates a flow chart of a tape attachment method for an electrode assembly according to another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her embodiments in the best way.

In the drawing figures, the dimensions of layers, elements, and regions may be exaggerated for clarity of illustration. It will also be understood that when a layer (or element) is referred to as being "on" another layer or substrate, it can be directly on the other layer or substrate, or intervening layers may also be present. In addition, it will also be understood that when a layer (or element) is referred to as being "between" two layers, it can be the only layer between the two layers, or one or more intervening layers may also be present. Like reference numerals refer to like elements throughout.

It will also be understood that if an element or layer is referred to as being "linked to," "connected to," or "coupled to" another element or layer, it may be directly linked, connected, or coupled to the other element or layer or one or more intervening elements or layers may also be present. When an element or layer is referred to as being "directly linked to," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C; A and B; A and C; B and C; or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, e.g., 2.4 to 7.6. Any maximum numerical limitation recited herein is intended to include all lower numerical limitations subsumed therein, and any minimum numerical limitation recited in this specification is intended to include all higher numerical limitations subsumed therein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, e.g., a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

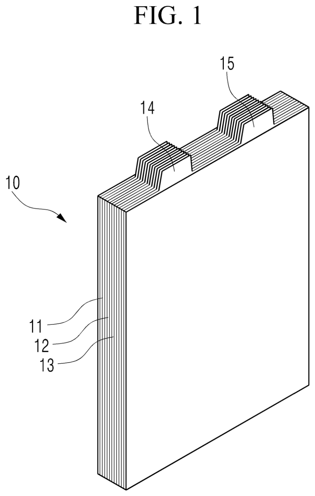

FIG. 1 is a schematic view illustrating an electrode assembly for a secondary battery according to some embodiments of the present disclosure.

Referring to FIG. 1, an electrode assembly 10 may be formed by winding or stacking a stack of a first electrode plate 11, a separator 12, and a second electrode plate 13, each of which are formed as thin plates or films. For example, as illustrated in FIG. 1, the electrode assembly 10 may be a stack type. In another example, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies 10 may have long side surfaces adjacent to each other stacked and may be stored inside a battery can, e.g., any suitable number of electrode assemblies may be used. For example, the first electrode plate 11 of the electrode assembly may act as a negative electrode, and the second electrode plate 13 may act as a positive electrode, e.g., the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal (see

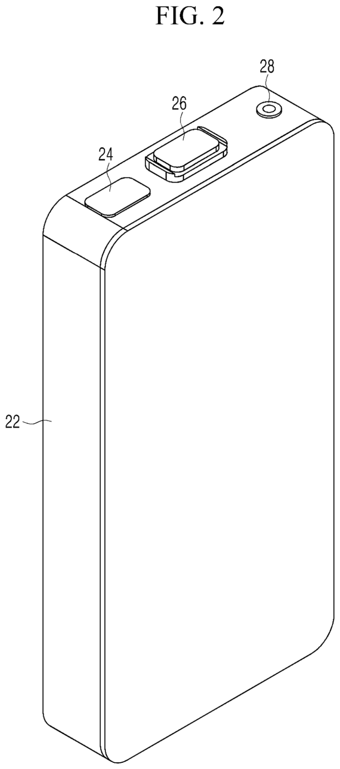

FIG. 2). In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminium or an aluminium alloy. The second electrode plate 13 may include a second electrode tab 15 (e.g., a second uncoated portion), which is a region to which the second electrode active material is not applied. The second electrode tab 15 may be connected to an external second terminal (see FIG. 2). In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, e.g., a polyethylene film, a polypropylene film, a polyethylene-polypropylene film, or the like.

In some embodiments, the electrode assembly 10 can be accommodated in a battery can and filled with an electrolyte. In a pouch-type secondary battery, the electrode assembly 10 may be accommodated in a pouch made of flexible material. In a prismatic secondary battery, the electrode assembly 10 may be accommodated in a prismatic metal casing.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D'_{c}(0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-8-c}Co₈X_{c}O_{2-α}D'_{α}(0.90≤a≤1.8, 0≤b≤0.5, 0≤c≤0.5, 0<α<2); LiₐNi_{1-b-c}Mn_{b}X_{c}O_{2-α}D'_{α}(0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas: A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G is Al, Cr, Mn, Fe, Mg, La, Ce, Sr, V, or a combination thereof; and L¹ may be Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminium (Al).

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, e.g., crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x≤2), a Si alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic material and the inorganic material may be mixed in one coating layer or may be in the form of a coating layer including (or containing) an organic material and a coating layer including (or containing) an inorganic material which are stacked on each other.

FIG. 2 is a schematic view illustrating an example of an exterior of a prismatic secondary battery according to some embodiments of the present disclosure.

Referring to FIG. 2, a battery can 22 may provide a space which accommodates the electrode assembly 10 and form the overall exterior of a secondary battery. The battery can 22 may be formed of a conductive metal such as stainless steel (SUS), aluminium, an aluminium alloy, nickel-plated steel, or the like.

A first terminal 24 and a second terminal 26 may be electrically connected to the first electrode tab 14 and the second electrode tab 15 of the electrode assembly 10 accommodated inside the battery can 22, respectively, and may be installed to be exposed to the outside of the battery can 22. The battery can 22 may include an electrolyte injection port 28, and an electrolyte may be injected through the electrolyte injection port 28. A vent which is opened due to gas generated inside the battery to degas the gas may be formed at any position of the battery can 22. For example, the terminal 26 having one polarity (+ or -) may be electrically connected to the first electrode tab 14 or the second electrode tab 15 of the electrode assembly 10 accommodated inside the battery can 22, and the other polarity may be connected to the first electrode tab 14 or the second electrode tab 15 of the battery can 22.

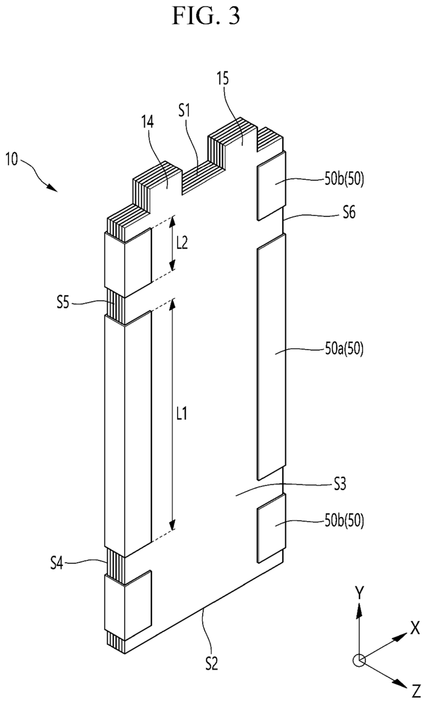

FIGS. 3 to 5 are schematic views illustrating an electrode assembly for a secondary battery according to an embodiment of the present disclosure.

Axes illustrated in the drawings, terms referring to the axes, and terms referring to directions such as vertical direction, front-rear direction (or a column direction), left-right direction (or a row direction) described with respect to the axes are only intended to provide relative references for describing embodiments of the present disclosure and are not intended to specify a certain direction, position, and the like in absolute references and can vary depending on a position of a target object, a position of an observer, a view direction, and the like.

Hereinafter, as illustrated in the drawings, a Z-axis direction is defined as a front-rear direction, a Y-axis direction is defined as a vertical direction, and an X-axis direction is defined as a left-right direction, and based on this, the following description will be given.

Referring to FIG. 3, the electrode assembly 10 for a secondary battery according to an embodiment of the present disclosure may have a stack structure (hereinafter referred to as a "stack") in which first electrode plates 11, second electrode plates 13, and separators 12 interposed therebetween are sequentially stacked in the front-rear direction (e.g., adjacent to each other in the Z-axis direction). For example, the stack of the electrode assembly 10 may be formed to have a length in a longitudinal direction (e.g., in the Y-axis direction), which is greater than that in a width direction (e.g., in the X-axis direction) to have a substantially hexahedral shape with a rectangular cross section. The stack of the electrode assembly 10 may be defined as an upper surface S1 and a lower surface S2 facing each other in the vertical direction (e.g., in the Y-axis direction), a front surface S3 and a rear surface S4 facing each other in the front-rear direction (e.g., in the Z-axis direction), and a left surface S5 and a right surface S6 facing each other in the left-right direction (e.g., in the X-axis direction). The first electrode tab 14 (or the first uncoated portion) and the second electrode tab 15 (or the second uncoated portion) of the electrode assembly 10 may protrude from at least one of the upper surface S1 and the lower surface S2, or one of the first and second electrode tabs 14 and 15 may be formed on the upper surface S1 and the other may be formed on the lower surface S2.

The electrode assembly 10 includes an adhesive member 50. The adhesive member 50 may be a tape including an adhesive surface, e.g., the adhesive member 50 may be an insulating tape. The adhesive member 50 may be attached to the stack of the electrode assembly 10 to maintain and fix the stack in a stacking state. The adhesive member 50 may be attached to at least one of the left surface S5 and the right surface S6 of the stack. For example, the adhesive member 50 may be attached to both the left surface S5 and the right surface S6 of the stack. For example, the adhesive member 50 may extend (e.g., continuously extend) to cover at least one of the left and right surfaces S5 and S6 of the stack, and may further cover at least a part of each of the front surface S3 and the rear surface S4 of the stack. The adhesive member 50 may be provided as a plurality of adhesive members. As needed, the adhesive member 50 may be attached to at least one of the upper surface S1 and the lower surface S2 of the stack. In this case, the adhesive member 50 may be attached to the stack while avoiding the first electrode tab 14 and the second electrode tab 15 (e.g., the adhesive member 50 may be attached to the stack without overlapping the first electrode tab 14 and the second electrode tab 15).

The adhesive member 50 includes a first adhesive member 50a and a second adhesive member 50b. The first adhesive member 50a is attached to correspond to a central portion of the stack in the longitudinal direction (e.g., the first adhesive member 50a may overlap a central portion of each of the left and right surfaces S5 and S6 of the stack in the Y-axis direction). The second adhesive member 50b is attached adjacent to the first adhesive member 50a in the longitudinal direction of the stack (e.g., along each of the left and right surfaces S5 and S6 of the stack in the Y-axis direction). The second adhesive member 50b may be provided as a plurality of second adhesive members.

The first adhesive member 50a and the second adhesive member 50b are distinguished based on an area of the adhesive surface adhered to the stack of the electrode assembly 10. That is, an area of an adhesive surface of the first adhesive member 50a is greater than an area of an adhesive surface of the second adhesive member 50b. According to embodiments of the present disclosure, it may be possible to minimize deformation (e.g., bending deformation) of the stack by fixing the stack of the electrode assembly 10 through the adhesive members 50. In particular, by forming the first adhesive member 50a attached to the central portion of the stack to have a greater adhesive surface than the second adhesive member 50b attached to the periphery of the stack, it is possible to minimize deformation of the central portion which is relatively easily deformed.

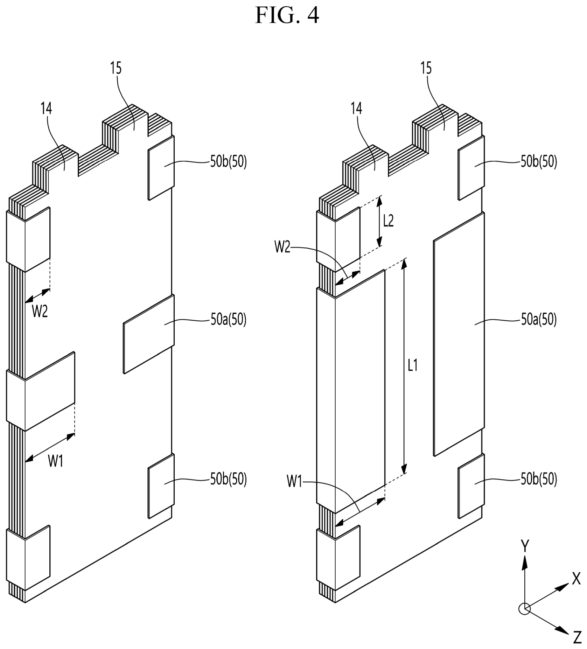

For example, as illustrated in FIG. 3, if the first adhesive member 50a is formed to have a length L1 in the longitudinal direction that is greater than a length L2 of the second adhesive member 50b and is attached to the stack, it is possible to secure a greater adhesive surface for the first adhesive member 50a than for the second adhesive member 50b. In another example, as illustrated at the left of FIG. 4, if the first adhesive member 50a is formed to have a width W1 of a portion covering at least one of the front surface S3 and the rear surface S4 of the stack in a width direction to be greater than a width W2 of the second adhesive member 50b and is attached to the stack, it is possible to secure a greater adhesive surface for the first adhesive member 50a than for the second adhesive member 50b. In yet another example, as illustrated at the right of FIG. 4, if the first adhesive member 50a is formed to have the length L1 in the longitudinal direction greater than the length L2 of the second adhesive member 50b and the width W1 of the portion covering at least one of the front surface S3 and the rear surface S4 of the stack in the width direction greater than the width W2 of the second adhesive member 50b and is attached to the stack, it is possible to secure a greater adhesive surface for the first adhesive member 50a than for the second adhesive member 50b.

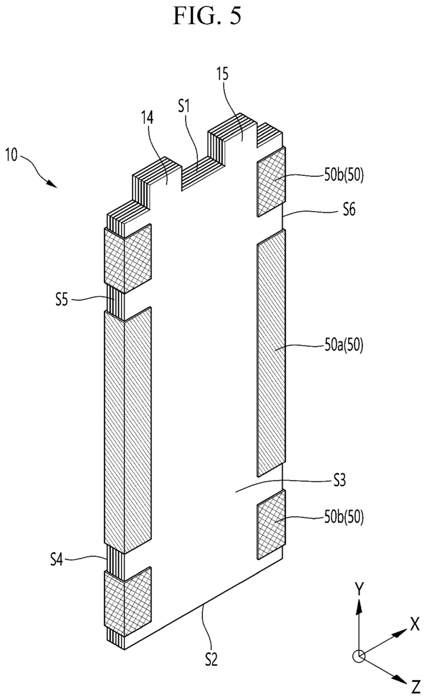

In still another example, referring to FIG. 5, the first adhesive member 50a and the second adhesive member 50b may be formed of different materials. That is, the first adhesive member 50a may be formed of a different material, compared to the second adhesive member 50b, and may be formed of a material having a relatively high rigidity. For example, a substrate of the adhesive member 50 may be formed of a material selected from polycarbonate (PC), polyethylene terephthalate (PET), polypropylene (PP), and polyethylene (PE). In this case, the first adhesive member 50a may be formed of PC having a relatively high rigidity, and the second adhesive member 50b may be formed of one of PET, PP, and PE.

According to embodiments of the present disclosure, the first adhesive member 50a may be attached to the central portion of the stack, and may be formed to have a greater adhesive surface than the second adhesive member 50b attached to the periphery of the stack, and may be formed of a material having a relatively high rigidity (e.g., the first adhesive member 50a may be formed of a material having a higher rigidity than a material of the second adhesive member 50b). Accordingly, it is possible to minimize deformation of the central portion of the electrode assembly 10 which could be relatively easily deformed.

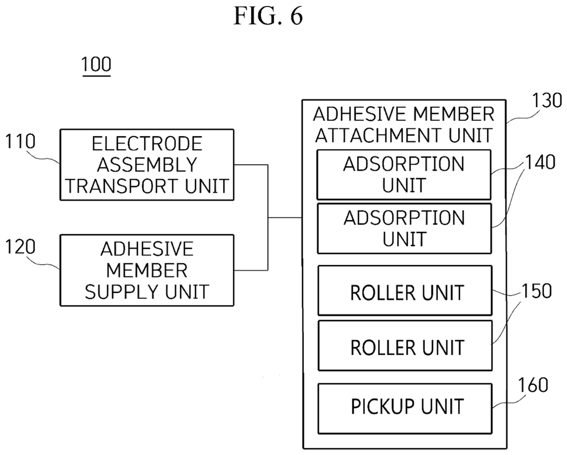

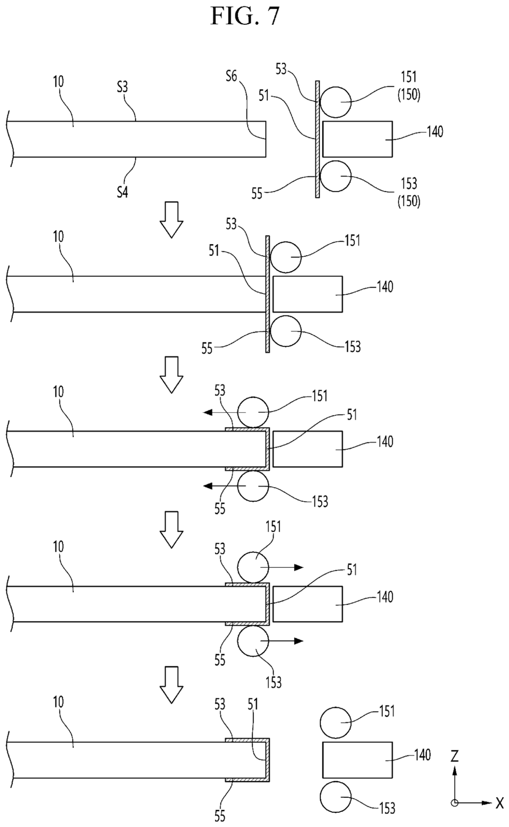

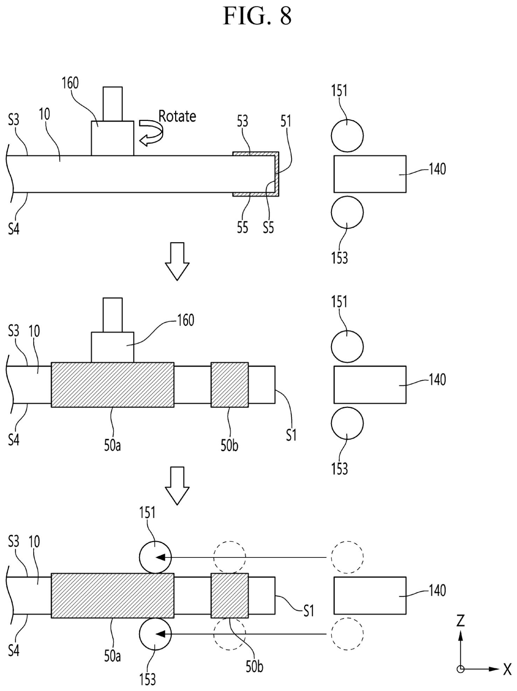

FIG. 6 is a schematic view illustrating a tape attachment apparatus for an electrode assembly according to an embodiment of the present disclosure. FIGS. 7 and 8 are schematic views of stages in a tape attachment process using the tape attachment apparatus of FIG. 6.

Referring to FIG. 6, a tape attachment apparatus 100 of the electrode assembly 10 according to an embodiment of the present disclosure may include an electrode assembly transport unit 110, an adhesive member supply unit 120, and an adhesive member attachment unit 130.

The electrode assembly transport unit 110 may transport a stack, in which the first electrode plates 11, the second electrode plates 13, and the separators 12 interposed therebetween are sequentially and alternately stacked in the front-rear direction, to the adhesive member attachment unit 130.

The adhesive member supply unit 120 may supply the adhesive member 50, cut into a predetermined unit length, to the adhesive member attachment unit 130. The adhesive member supply unit 120 may include a bobbin around which a film is wound. The film unwound from the bobbin may be cut to have a predetermined adhesive surface through a cutting means, and the cut film may be referred to as the adhesive member 50.

The adhesive member supply unit 120 may cut the adhesive member 50 so that the first adhesive member 50a has an adhesive surface having a first area and the second adhesive member 50b has an adhesive surface having a second area narrower than the first area and provide the cut film to the adhesive member attachment unit 130. For example, the adhesive member supply unit 120 may process the first adhesive member 50a having the first unit length L1 (see FIG. 4) in the longitudinal direction and/or the first unit width W1 (see FIG. 4) in the width direction and the second adhesive member 50b having the second unit length L2 (see FIG. 3) in the longitudinal direction and/or the second unit width W2 (see FIG. 4) in the width direction and provide the processed first and second adhesive members to the adhesive member attachment unit 130. The adhesive member supply unit 120 may have any suitable configuration.

Referring to FIGS. 6 and 7, the adhesive member attachment unit 130 (e.g. a tape attachment apparatus) includes an adsorption unit 140 and a roller unit 150. For example, referring to FIG. 7, the adsorption unit 140 may have a same thickness as the electrode assembly 10 in the Z-axis direction, and the roller unit 150 includes a first roller 151 and a second roller 153 on opposite surfaces of the adsorption unit 140 in the Z-axis direction. The first and second rollers 151 and 153 may be movable in the X-axis direction along opposite surfaces of the adsorption unit 140 and of the electrode assembly 10.

The adsorption unit 140 may provide an adsorption force for fixing the adhesive member 50 having the unit length provided from the adhesive member supply unit 120 to a preset position. That is, the adsorption unit 140 is a device for selectively adsorbing and fixing at least a part, e.g., a central portion 51, of the provided adhesive member 50 and aligning and moving the adhesive member 50 with and to a correct position. For example, the adsorption unit 140 may include an adsorption plate having an adsorption hole formed therein and may be connected to a vacuum pump. The adsorption plate may be in contact with one surface facing the adhesive surface of the adhesive member 50 and may selectively adsorb and fix the adhesive member 50 under driving of the vacuum pump.

The adsorption unit 140 may be provided as a plurality of adsorption units, and each of the plurality of adsorption units 140 may adsorb and fix the adhesive member 50 to be attached to the stack of the electrode assembly 10. For example, the adsorption unit 140 may include a first adsorption unit for fixing the first adhesive member 50a to the stack and a second adsorption unit for fixing the second adhesive member 50b to the stack. The first adsorption unit and the second adsorption unit may be arranged to be spaced a predetermined interval from each other in the longitudinal direction of the electrode assembly 10.

The adsorption unit 140 may be aligned to correspond to (e.g., overlap) at least one of the left surface S5 and the right surface S6 of the stack while fixing the adhesive member 50. The adsorption unit 140 may be provided to linearly reciprocate (e.g., move) in the width direction of the stack (e.g., in the X-axis direction) in an aligned state in order to bring the central portion 51 of the adhesive member 50 into contact with at least one of the left surface S5 and the right surface S6 of the transported stack (e.g., second stage in FIG. 7).

The roller unit 150 includes a first roller 151 and a second roller 153 which are aligned to correspond to one end portion 53 and another end portion 55 of the provided adhesive member 50, respectively. The first roller 151 may be provided to linearly reciprocate in the width direction of the transported electrode assembly 10 in an aligned state so as to be in contact with the one end portion 53 of the adhesive member 50. The first roller 151 may move in one direction while rotating about a center axis, and during the moving process, the first roller 151 may perform an operation of being in contact with the one end portion 53 of the adhesive member 50 and attaching the one end portion 53 of the adhesive member 50 to at least a part of the front surface S3 of the electrode assembly 10 (e.g., the first roller 151 may move along the arrow in the third stage in FIG. 7). The second roller 153 may be provided to linearly reciprocate in the width direction of the transported electrode assembly 10 in an aligned state so as to be in contact with the other end portion 55 of the adhesive member 50. The second roller 153 may move in one direction while rotating about a center axis, and during the movement process, the second roller 153 may perform an operation of being in contact with the other end portion 55 of the adhesive member 50 and attaching the other end portion 55 of the adhesive member 50 to at least a part of the rear surface S4 of the electrode assembly 10 (e.g., the second roller 153 may move along the arrow in the third stage in FIG. 7).

The roller unit 150 may be provided as a plurality of roller units, and each of the plurality of roller units 150 may be formed in a pair with the corresponding adsorption unit 140. For example, the roller unit 150 may include a first roller unit for fixing the first adhesive member 50a to the stack and a second roller unit for fixing the second adhesive member 50b to the stack. The first roller unit and the second roller unit may be arranged to be spaced a predetermined interval from each other in the longitudinal direction of the electrode assembly 10.

Subsequently, the tape attachment apparatus 100 of the electrode assembly 10 may additionally perform a pressing operation using a roller. The first roller 151 may move in a direction opposite to the one direction while rotating about the center axis and additionally perform an operation of pressing the one end portion 53 of the adhesive member 50, which is attached to the front surface S3 of the electrode assembly 10 during the moving process (e.g., the fourth stage in FIG. 7). The second roller 153 may move in the direction opposite to the one direction while rotating about the center axis and additionally perform an operation of pressing the other end portion 55 of the adhesive member 50, which is attached to the rear surface S4 of the electrode assembly 10 during the moving process (e.g., the fourth stage in FIG. 7). As the additional pressing operation is performed, the adhesive member 50 may be more firmly fixed to the stack.

Subsequently, the adsorption unit 140 and the roller unit 150 may move and stop in a direction oriented away from the electrode assembly 10 to which the adhesive member 50 is attached (e.g., the fifth stage in FIG. 7).

Referring further to FIG. 8, the adhesive member attachment unit 130 may further include a pickup unit 160. The pickup unit 160 may pick up and rotate the stack of the electrode assembly 10 in a state in which the tape attachment process has been primarily completed. That is, the pickup unit 160 may rotate the electrode assembly 10 at 90° based on a virtual center axis of the electrode assembly 10, which extends in the front-rear direction. For example, referring to FIG. 8, the electrode assembly 10 may be rotated 90° out of the page around the axis of the pickup unit 160 to move the left surface S5 with the first and second adhesive members 50a and 50b away from facing the adsorption unit 140 (e.g., first stage to second stage in FIG. 8). The electrode assembly 10 may be rotated by the rotation operation of the pickup unit 160, and a direction of the linear reciprocating motion of the first roller 151 and the second roller 153 may correspond to the longitudinal direction of the electrode assembly 10.

For example, the pickup unit 160 may include a pickup head including a vacuum hole and may be connected to a vacuum pump to perform a selective adsorption function. Parts such as an adsorption pad may be coupled to perform the adsorption function. In addition, the pickup unit 160 may include a motor for rotating the pickup head and rotate the electrode assembly 10 to a desired angle under the driving of the motor. Any suitable configuration of the rotatable pickup means may be implemented.

In a state in which the direction of the electrode assembly 10 has been changed, the tape attachment apparatus 100 of the electrode assembly 10 may additionally perform a pressing operation using a roller (e.g., the third stage in FIG. 8). The first roller 151 may move in the one direction while rotating about the center axis and perform an operation of pressing the plurality of the adhesive members 50a and 50b attached to the front surface S3 of the electrode assembly 10 during the moving process. The above direction in which the first roller 151 moves may correspond to the longitudinal direction of the electrode assembly 10. The second roller 153 may move in the one direction while rotating about the center axis and perform an operation of pressing the plurality of the adhesive members 50a and 50b attached to the rear surface S4 of the electrode assembly 10 during the moving process. The above direction in which the second roller 153 moves may correspond to the longitudinal direction of the electrode assembly 10. As the additional pressing operation is performed, the adhesive member 50 may be more firmly fixed to the stack.

Subsequently, the adsorption unit 140 and the roller unit 150 may move and stop in a direction oriented away from the electrode assembly 10 to which the adhesive member 50 is attached.

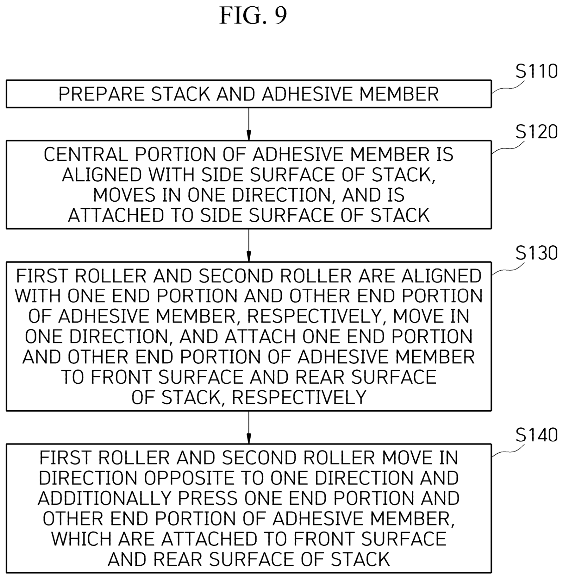

FIG. 9 is a flow chart of a tape attachment method for an electrode assembly according to an embodiment of the present disclosure. The tape attachment method for the electrode assembly 10 according to an embodiment of the present disclosure may be a method using the tape attachment apparatus 100.

Referring to FIG. 9, the tape attachment method for the electrode assembly 10 may include preparing the stack in which the first electrode plate 11, the second electrode plate 13, and the separator 12 interposed therebetween are sequentially stacked in the front-rear direction and preparing an adhesive member having an adhesive surface with a predetermined area (S110). Next, the method may include aligning the central portion of the adhesive member 50 cut into unit lengths through the adsorption unit 140 to the side surface S5 or S6 of the stack and moving the adsorption unit 140 in one direction to attach the central portion of the adhesive member 50 to the side surface S5 or S6 of the stack (S120). Here, the one direction in which the adsorption unit 140 moves may correspond to the width direction of the electrode assembly 10. Next, the method includes aligning the first roller 151 and the second roller 153 to the one end portion 53 and the other end portion 55 of the adhesive member 50, respectively, and moving the first roller 151 and the second roller 153 in the one direction to attach the one end portion 53 and the other end portion 55 of the adhesive member 50 to the front surface S3 and the rear surface S4 of the stack, respectively (S130). Next, the method may include moving the first roller 151 and the second roller 153 in the direction opposite to the one direction and additionally pressing the one end portion 53 and the other end portion 55 of the adhesive member 50, which are attached to the front surface S3 and the rear surface S4 of the stack (S140). Subsequently, the attachment method may be completed when the adsorption unit 140 and the roller unit 150 move and stop in a direction oriented away from the electrode assembly 10.

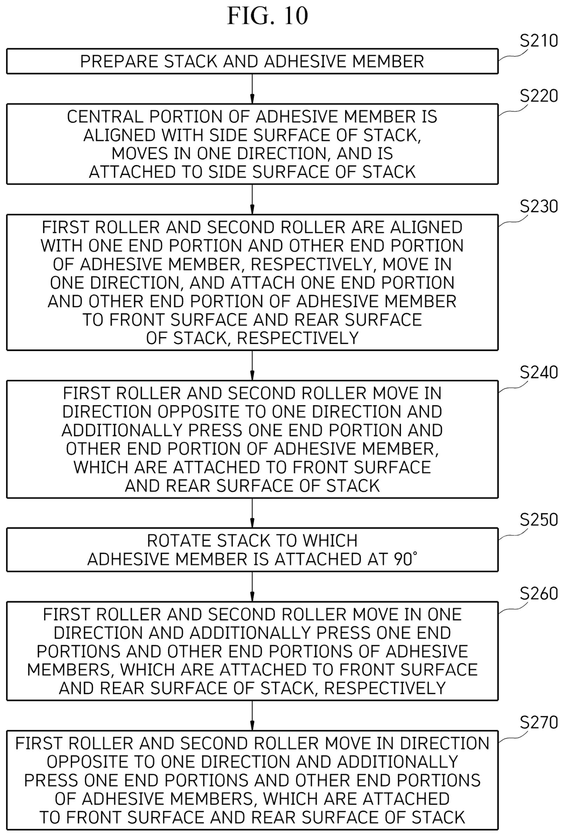

FIG. 10 is a flow chart of a tape attachment method for an electrode assembly according to another embodiment of the present disclosure. The tape attachment method of FIG. 10 may be a method using the tape attachment apparatus 100. The first to fourth operations S210, S220, S230, and S240 in FIG. 10 are substantially the same as operations S110, S120, S130, and S140 described previously with reference to FIG. 9, and therefore, descriptions thereof will not be repeated.

Referring to FIG. 10, the method may further include rotating the electrode assembly 10 to which the adhesive member 50 is attached at 90° through the pickup unit 160 (S250), and moving the first roller 151 and the second roller 153 in the one direction and additionally pressing the one end portion 53 and the other end portion 55 of the adhesive member 50, which are attached to the front surface S3 and the rear surface S4 of the stack (S260). Here, the one direction in which the first roller 151 and the second roller 153 move may correspond to the longitudinal direction of the electrode assembly 10 as the electrode assembly 10 is rotated by the pickup unit 160. Next, the method may include moving the first roller 151 and the second roller 153 in the direction opposite to the one direction and additionally pressing the one end portions 53 and the other end portions 55 of the adhesive members 50a and 50b, which are attached to the front surface S3 and the rear surface S4 of the stack (S270). Subsequently, the attachment method may be completed when the roller unit 150 moves and stops in a direction oriented away from the electrode assembly 10.

According to an electrode assembly of the present disclosure, since at least one side surface of a stack is fixed through an adhesive member, the stack in a stacking state can be stably maintained and fixed and deformation of the stack can be minimized, thereby improving product stability and reliability. In particular, according to the electrode assembly of the present disclosure, since an adhesive surface of an adhesive member, which is adhered to a central portion of the stack, is relatively widely secured, deformation of the central portion which can be relatively easily deformed can be minimized. Accordingly, it is possible to prevent or substantially minimize shortening of a battery lifetime due to deformation of the electrode assembly in a manufacturing environment and/or use environment.

By way of summation and review, as the use environments of secondary batteries have been diversified, secondary batteries with various exteriors may be provided to correspond to the use environments. For example, a secondary battery may be manufactured in consideration of the type of a device to which the secondary battery is applied and an accommodation space of the secondary battery, and may generally be provided in a long type structure in which a length in a longitudinal direction is greater than that in a width direction. However, bending deformation of an electrode assembly may occur relatively frequently in a manufacturing environment and/or use environment, and a separator can be damaged due to such deformation, thereby causing an internal short circuit or a reduced battery lifetime due to voids generated at interfaces between electrode plates and the separator.

In contrast, the present disclosure is directed to providing an electrode assembly in which a stack in a stacking state is stably maintained and fixed by fixing at least one side surface of the stack using an adhesive member, and a tape attachment apparatus and method for manufacturing the electrode assembly.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode assembly for a secondary battery, comprising:
a stack including a first electrode plate, a second electrode plate, and a separator between the first electrode plate and the second electrode plate; and
an adhesive member attached to at least one side surface of the stack, the adhesive member extending to cover the at least one side surface of the stack and at least a part of each of a front surface and a rear surface of the stack, the adhesive member including:
a first adhesive member attached to the stack at a central portion of the stack in a longitudinal direction, and
a second adhesive member attached to the stack and adjacent to the first adhesive member in the longitudinal direction, an adhesive surface of the first adhesive member having a greater area than an adhesive surface of the second adhesive member.

2. The electrode assembly as claimed in claim 1, wherein a length of the first adhesive member in the longitudinal direction is greater than a length of the second adhesive member in the longitudinal direction.

3. The electrode assembly as claimed in claim 1 or claim 2, wherein a width of the first adhesive member in a width direction is greater than a width of the second adhesive member in the width direction.

4. The electrode assembly as claimed in any one of claims 1 to 3, wherein the first adhesive member includes a material having a higher rigidity than a material of the second adhesive member.

5. A tape attachment apparatus for manufacturing the electrode assembly as claimed in any one of claims 1 to 4, the tape attachment apparatus comprising:
an adsorption unit configured to selectively adsorb and fix a central portion of the adhesive member, align and move the central portion with and to a correct position, and attach the central portion to the at least one side surface of the stack; and
a roller unit including a first roller and a second roller aligned to correspond to one end portion and another end portion of the adhesive member, respectively, the roller unit being configured to linearly reciprocate,
wherein the first roller and the second roller are configured to move in one direction and attach the one end portion of the adhesive member and the other end portion of the adhesive member to the front surface and the rear surface of the stack, respectively.

6. The tape attachment apparatus as claimed in claim 5, wherein the first roller and the second roller are configured to move in a direction opposite to the one direction and to press the one end portion and the other end portion of the adhesive member, respectively.

7. The tape attachment apparatus as claimed in claim 6, wherein:
the adsorption unit includes a first adsorption unit configured to attach the first adhesive member to the stack, and a second adsorption unit configured to attach the second adhesive member to the stack, the second adsorption unit being spaced a predetermined interval from the first adsorption unit in the longitudinal direction of the stack, and
the roller unit includes a first roller unit configured to attach the first adhesive member to the stack, and a second roller unit configured to attach the second adhesive member to the stack, the second roller unit being spaced a predetermined interval from the first roller unit in the longitudinal direction of the stack.

8. The tape attachment apparatus as claimed in claim 6 or claim 7, wherein the one direction corresponds to a width direction of the stack.

9. The tape attachment apparatus as claimed in claim 7 or claim 8, wherein the first roller and the second roller are configured to move in the one direction and to press the one end portion of the adhesive member and the other end portion of the adhesive member, respectively, after rotation of the stack.

10. The tape attachment apparatus as claimed in claim 9, wherein the first roller and the second roller are configured to move in the direction opposite to the one direction and to press the one end portion of the adhesive member and the other end portion of the adhesive member, respectively, after rotation of the stack.

11. A tape attachment method for manufacturing the electrode assembly as claimed in any one of claims 1 to 4, the tape attachment method comprising:
preparing the stack and the adhesive member;
aligning a central portion of the adhesive member to a side surface of the stack, moving the central portion in one direction, and attaching the central portion to the side surface of the stack; and
aligning a first roller and a second roller to one end portion and another end portion of the adhesive member, respectively, moving the first roller and the second roller in the one direction, and attaching the one end portion and the other end portion of the adhesive member to the front surface and the rear surface of the stack, respectively.

12. The tape attachment method as claimed in claim 11, wherein the one direction corresponds to a width direction of the stack.

13. The tape attachment method as claimed in claim 12, further comprising moving the first roller and the second roller in a direction opposite to the one direction and additionally pressing the one end portion and the other end portion of the adhesive member, which are attached to the front surface and the rear surface of the stack.

14. The tape attachment method as claimed in claim 13, further comprising:
rotating the stack to which the adhesive member is attached at 90°; and
moving the first roller and the second roller in the one direction and additionally pressing the one end portion and the other end portion of the adhesive member, which are attached to the front surface and the rear surface of the stack.

15. The tape attachment method as claimed in claim 14, wherein the one direction corresponds to the longitudinal direction of the stack, after rotating the stack.
